(19) Europäisches Patentamt
European Patent Office
Office européen des brevets

(11) Publication number: 0 455 439 A2

(12) # EUROPEAN PATENT APPLICATION

(21) Application number: 91303832.9

(51) Int. Cl.$^5$: G06F 15/72

(22) Date of filing: 26.04.91

(30) Priority: 02.05.90 US 517785

(43) Date of publication of application:
06.11.91 Bulletin 91/45

(84) Designated Contracting States:
BE CH DE ES FR GB IT LI NL SE

(71) Applicant: International Business Machines Corporation
Old Orchard Road
Armonk, N.Y. 10504 (US)

(72) Inventor: Behm, Jason Lyle
33 Dunneman Avenue
Kingston, New York 12401 (US)
Inventor: Chiang, Wei-Hwan
Terrace Lane
Hurley, New York 12443 (US)

(74) Representative: Blakemore, Frederick Norman
IBM United Kingdom Limited Intellectual Property Department Hursley Park
Winchester Hampshire SO21 2JN (GB)

(54) **Computer method and system for analysing real or simulated physical systems.**

(57) Numerical data values are analysed, organised, and stored for retrieval and rendering on a graphics display system. A system and method are provided for organising numerical data arrays for rapid access and display. Several graphic representations are used to analyse scientific data. For example concurrently displayed translucent three dimensional contour surfaces are employed to analyse multi-dimensional data. Display management functions are provided for viewing data in three dimensional form, as cut by specified plane and as viewed over time by using short time delays between related displays to provide a movie-like presentation. Input data may be accepted from an operator by the visualisation manager for redirecting or steering an underlying numerical simulation.

EP 0 455 439 A2

Jouve, 18, rue Saint-Denis, 75001 PARIS

This invention is directed to computer methods and apparatus for analysing real or simulated physical systems, and more particularly to methods and apparatus for generating visual images from numerical data created by simulations or collected from a measured environment.

Computer technology is being employed to analyse an increasing variety of scientific, engineering and business problems. Computer applications have been developed that numerically simulate a problem providing data on the response of a particular environment to certain stimuli or conditions. In addition, computer technology has made possible numerical analysis of data collected from certain measured environments. These environments include, for example, medical imaging technologies such as computer axial tomography (CAT) and nuclear magnetic resonance (NMR). Astronomy / astrophysics researchers use radio telescopes to collect large amounts of data for computer processing. The processing may include displaying multidimensional data in graphical or visual form.

The use of numerical models and numerical data collection techniques has been hampered by the problem of adequately presenting the results of the simulation or data collection to the researcher in an effective form for human understanding. Early simulations provided large printouts containing long columns of numbers. More recently, the results of simulations or numerical analyses have been commonly shown using graphical representations. The latest computer technology employs high resolution graphics workstations or specialised graphics terminals to display the simulated or measured data in a variety of readily understood forms.

Current advanced graphic display systems have the disadvantage of requiring sophisticated knowledge of graphics programming techniques to transform the results of a computer simulation or measurement into usable graphics output. Prior art systems also suffer from the limitation of being oriented to the display of data in two dimensional formats similar to earlier printed plots. Without sophisticated graphics programming capabilities the researcher is unable to use the more advanced features of a graphics display system to glean the full value of the data.

The remaining technical problem is the need for a system for storing and viewing reduced data such as contour lines or contour surfaces. Prior art systems provided no means of retaining or organising reduced data.

According to the present invention there is provided a method for generating a visual representation of discretely sampled data values on a display device, said data values each representing a value of a variable describing a property of a real or imaginary system, said method operating on a computer system having a storage means and an operator interaction means, the method comprising the steps of: storing a data transform and a set of image organisation rules wherein said data transform specifies the data values to be analysed and a method for transforming from said data values to an image element; transforming said data values into said image element by accessing said data values, ordering said data values into a mesh of polyhedra with each vertex formed by a data value, reducing said mesh to an image element by pixelisation, volume rendering, contour surface generation, or the generation of an arrow; storing said image element in a standardised data structure in a hierarchical data store according to said image organisation rules; accessing said hierarchical data structure to extract a plurality of standardised data structures for visual representation; rendering said plurality of standardised data structures as a two dimensional representation of a three dimensional figure based upon said required representation to create said visual representation; storing said visual representation in said storage means for display on said display device.

Further according to the present invention there is provided a system for visualising numerical data wherein said data is continuously generated by a computer application, said system comprising: storage means for periodically storing a set of said numerical data; object generation means for transforming said set of data into graphical objects; rendering means for rendering said graphical objects for display; and display means for displaying said rendered graphical objects.

The present invention can provide an easy way for researchers to display and manipulate data resulting from numerical simulations or data collected from a measured environment. The types of displays provided include single still images, a movie-like sequence of related images, and images comprised of translucent contoured surfaces. The three dimensional representational system provides the ability to view a resultant image from any angle, to manipulate the image, and to re-view data previously considered.

**In the drawings:**

Fig. 1 is a block diagram of a visualisation system according to the present invention,

Fig. 2 is an example of translucent contoured surfaces,

Fig. 3 is a state transition diagram illustrating the operation of the preferred embodiment of the present invention and

Fig. 4 is a flow chart depicting analysis logic employed by the present invention.

The present invention is directed to providing a system and method for managing numerical data generated by a numerical simulation or collected by data gathering apparatus. The system of the preferred embodiment will be described with reference to Fig. 1.

A computer application 100 performing a numerical simulation or data gathering function produces numerical results in the form of an array of numerical values. These values are typically arranged in the form of an array of discretely sampled points. The data collected is multi-dimensional, i.e. it can contain an unlimited number of observations, i. The discrete data array is typically presented as follows:

x(i), y(i), z(i), t(i), v1(i), v2(i),..., vn(i).

The computer application 100, periodically transmits a data array or mesh 102 containing data values as described above to program interface 104 of the present system. Interface 104 accepts the data 102 and performs initial processing for visualisation manager 106 according to control parameters 108 supplied by the application 100. The control parameters specify, among other things, the dimensions of the data array being passed to the interface, the length of each data item, and the status of any simulation that is occurring.

The preferred embodiment retains the data array 102 in storage 105 for reprocessing as the selected visualisation method is changed. The control parameters are established by the researcher when the application 100 is developed and are stored at 108 when the application begins execution.

Interface 104 establishes the viewing method for the data using control parameters 108. Mesh data passed in array 102 is typically viewed in one of the following ways: pixelisation; volume rendering; translucent contour surfaces; and three dimensional arrows representing vector data.

Data structure organiser 114 operates on the supplied data to create image structures according to the viewing method established by interface 104. Interface 104 accesses the data in data array 102 and provides the necessary values to data structure organiser 114 in response to data requests.

The operation of data structure organiser and the associated components is shown in greater detail in Fig. 4. Viewing parameters 108 are accessed in step 100. These viewing parameters are used by interface 104 to set the viewing method 202. Data structure organiser performs data analysis and storage steps in response to the selected viewing method.

Pixelisation is the most common visualisation technique. A two dimensional view is generated from the x(i), y(i) and z(i) values for various time steps t(i), and for various variables considered, vj(i). Images may be created from the data by setting all but two of the dimensions constant and mapping the remaining two dimensions to the two physical dimensions of the workstation display surface. Thus, for any time and variable (e.g. pressure, temperature, velocity,) and constant depth z, the x and y dimension may be mapped to the workstation's horizontal and vertical dimensions.

Data structure organiser 114 first determines 204 the variable, vj(i), that is to be displayed. Then the two viewing axes are determined 206. All other variables are held constant 208 while data is accessed from data array 102 to generate the pixel image 210. Each image is generated according to a selected graphics interface protocol. The preferred embodiment employs the Programmer's Hierarchical Interface for Graphic Systems (PHIGS). Each PHIGS image is constructed from a plurality of image elements which together represent the final image. Each image is formed from a hierarchy of elements. The pixel image generated in step 210 is stored by I/O manager 116 to system storage 118.

Colour can be used to indicate the value of each location (pixel) on the display surface e.g. blue for low temperature and red for high temperature. The colours may be discrete or smoothly interpolated between known values.

The system according to the present invention treats all dimensions with equal status. In other words, the researcher may view all combinations of variables even those which initially do not appear to make sense. For example, the researcher may choose to hold x,y, and z constant and view time and the variables as the two dimensions. In this case, all data displayed is for a single point in the mesh but the display contains the data associated with all times and all variables for that point. Each horizontal row will represent times for a particular variable and each vertical column represent all variables for a particular time. The usefulness of such a combination may not be anticipated, however the ability should exist to display that combination. This capability can give a researcher new understanding and insight into the data being analysed.

A second form of data display is volume rendering. Volume rendering is typically used in medical imaging such as the images produced by computer axial tomography (CAT) scans. The data value mesh may be shown by creating a solid for each cube in the mesh (a voxel) and then rendering that cube on a workstation.

Data structure organiser 114 accesses data array 102 to generate 220 a set of cubes from the data. The variable data for each vertex of the cube is analysed to determine 222 the voxel display parameters (e.g. intensity, colour). Each voxel is an image element that can be stored by I/O manager 116 in hierarchical storage 224. Removing individual cubes, or making them transparent or translucent creates greater flexibility in attempting to analyse the results of the computation or measuring.

Display manager 120 accesses the hierarchical structure and displays the selected data on display device 122.

Translucent contour surfaces may be used to view multiple contour surfaces simultaneously. The three-dimensional data values may be represented by using a workstation's three-dimensional processing capability to generate a contour surface. The contour surface is generated using triangulation or non-rational uniform B-spline (NURBS) processing to create a surface encompassing a constant value for one data variable (an isometric surface) e.g. the isothermal surface representing all points where the temperature is 100 degrees.

The present invention includes an ability to generate translucent coloured contour surfaces. Each surface may have a specified colour and degree of translucency, i.e. the relationship between the visible and non visible portions of any surface area.

Translucency allows multiple surfaces to be shown on the display system with the ability to view the particular contours of each. The displayed contour surface when combined with display device features for three-dimensional rotation, translation, and zoom, and with an ability to provide movie-like views a (timed sequence of a series of surfaces), greatly enhances the researcher's ability to perceive the complex interactions occurring within data from a computer simulation or measured environment.

Contour surfaces are generated by analysing data array 102 by forming the data into a series of polyhedra or triangles. Interface 104 first generates triangles or polyhedra as specified by parameters 108. The variable data values vj(i) are analysed to determine contour levels for display. The system can automatically select contour level settings 232 or they can be specified in parameters 108. Each polyhedron or triangle is tested 236 to determine whether a contour surface passes through that polyhedron or triangle. This is done by comparing the variable values of the vertices to the contour surface values. If a contour value is either less than or greater than all vertex values, then the contour does not intersect that polyhedron or triangle. If the contour does intersect, the point of intersection is determined by interpolating 238 between vertex values. After all intersection points are determined for a polyhedron or triangle, the surface intersection can be determined. A series of intersections can be analysed by the system to develop the parameters for a Non-rational b-spline surface (NURBS). The parameters for the surface or NURBS surface or stored in hierarchical storage by I/O manager 116. NURBS surfaces have the advantage of representing complex surfaces using few parameters, thereby reducing storage requirements and speeding display.

To display more than one contour surface concurrently, an image may be rendered which shows all of the contour surfaces even though one contour surface may be completely contained within another contour surface and normally hidden using prior visualisation methods. Each of the surfaces is rendered using a translucent colour capability which allows each surface to be visible even though contained within another surface. When combined with the ability to rotate the surfaces in three-dimensions, the researcher is provided with a good vehicle for perceiving and analysing the result of a calculation or measurement.

Translucent contour surfaces and pixelisation may be combined in a single view. For example, the researcher would be able to specify any two dimensional cutting plane originated in three-dimensions and have pixelisation interpolated onto that plane. This appears as a pixelised plane cutting through the transparent or translucent surfaces and rendering them in perspective in three-dimensions. The researcher is also able to move the plane independently from the contour surfaces and thus sweep across the contour surfaces with continuous pixelisation taking place.

Three-dimensional arrows may also be added to the rendered image to show the values of particular variable. For example, arrows could be provided showing for the indicated point the velocity of movement of a fluid across the surface. Each arrow represents a vector at that point. The preferred embodiment uses cone arrows having different coloured interior and exterior surfaces allowing the researcher to see the difference between arrow tails oriented toward or away from the view point.

Arrows are generated by data storage manager 114 by having interface 104 access data array 102 to supply variable values for selected points. The data to be represented by an arrow is specified in parameters 108. Manager 114 access the data and generates 250 an arrow based on the data content. For example, if velocity is to be represented, then the magnitude and orientation of the velocity at the current pixel is transformed into an arrow structure having a length and orientation corresponding to the velocity. Each arrow formed in this manner is stored 252 in hierarchical storage by I/O manager 116.

The data structure is organised hierarchically using the programmers Hierarchical Interactive Graphics Standard (PHIGS) representation. Each contour surface is defined as an atomic object that can be related 132 to form aggregated images. The display image is the highest level combination of all aggregated images selected for viewing. The preferred embodiment uses the IBM graPHIGS program product to organise and store the data.

The use of hierarchically structured objects provides the researcher with significant flexibility to manipulate the displayed images. For example, the original image may include surfaces generated at ten contour levels. A simplified image showing contours at only five levels can be generated by simple operator commands 136. The basic data 102 is not reanalysed so the new display is quickly generated.

The researcher may also use workstation features for manipulating objects by rotation, scaling, and translation. Operator interaction devices 124 may include a mouse, dials, cursor and tablet or other means of manipulating the image. These devices are managed by I/O manager 116 and because the data is represented in standard form, the researcher can use these manipulation features without detailed programming and without reanalysing the data. Finally, the researcher may change the object properties by varying the colour, lighting source and intensity, or degree of translucency.

Modification 138 of the dimensions held constant and displayed or changes to contour levels requires that interface 104 and structure organiser 114 reprocess the data values retained in memory 105 to generate new contour surface objects for display.

A profile 110 is provided to image manager 112 for organising and storing the data values accepted through interface 104. Data values are structured by structure organiser 114 and stored by input/output (I/O) manager 116 onto disk or other storage 118. The use of default parameters in the structure organisation means 114 and the use of graPHIGS objects allows I/O manager 116 to have standardised storage formats that are capable of accepting a variety of data for storage in a common format.

Data structure organiser 114 converts the data array 102 into a standardised storage format according to PHIGS conventions. Hierarchical storage allows rapid retrieval and manipulation of the data to be displayed in a variety of formats. Display manager 120 is used to extract the appropriate data, perform rendering functions and transmit the data for display on display device 122. While in the preferred embodiment a video display device is used, it will be understood that any form of all-points-addressable display device may be used with the present invention.

The display manager 120 manages the display so that multiple windows can be displayed on monitor 122 with the data in each window being extracted independently. This allows the same data to be viewed from a variety of angles or with a variety of variables in concurrent windowed displays.

The display of data from a computer simulation in three-dimensional form provides greater information to the researcher than static graphic plots. By viewing data results while the simulation is proceeding the researcher has an opportunity to guide or terminate the simulation based upon a graphical review of the output. This review or termination is known as "steering" the simulation. The "steering" may involve modifications to selected variables of the simulation or outright termination. Input devices 124 are used to communicate steering modifications to visualisation manager 106. These controls are passed over line 126 to applications program 100 for action. The preferred embodiment establishes communication between application 100 and visualisation manager 106 through a common block.

The ability to view multiple three-dimensional contour surfaces and the ability to use graphics workstation tools to analyse the contour is a great benefit to researchers. Fig. 2 illustrates the concept of multiple translucent surfaces on a single display. Surfaces 150 and 152 each represents a separate contour surface in an experiment under study. Prior art systems were unable to provide an effective means of visualising an overlap between 150 and 152. The prior art systems would cause the 150 or 152 to overlay the other thus obscuring a portion of the resulting display. Present invention cures this problem by using translucency so that portions of both the first and the second, and subsequent images may be viewed by the researcher.

## Claims

1. A method for generating a visual representation of discretely sampled data values on a display device, said data values each representing a value of a variable describing a property of a real or imaginary system, said method operating on a computer system having a storage means and an operator interaction means, the method comprising the steps of:

   storing a data transform and a set of image organisation rules wherein said data transform specifies the data values to be analysed and a method for transforming from said data values to an image element;

   transforming said data values into said image element by accessing said data values, ordering said data values into a mesh of polyhedra with each vertex formed by a data value, reducing said mesh to an image element by pixelisation, volume rendering, contour surface generation, or the generation of an arrow;

   storing said image element in a standardised data structure in a hierarchical data store according to said image organisation rules;

   accessing said hierarchical data structure to extract a plurality of standardised data structures for visual representation;

   rendering said plurality of standardised data structures as a two dimensional representation of a three dimensional figure based upon said required representation to create said visual representation;

   storing said visual representation in said storage means for display on said display device.

2. The method of claim 1 wherein said transforming step generates data objects representing isometric contour surfaces.

3. The method of claim 2 further comprises the step of:

repeating the steps of accessing, rendering, and storing the visual representation for each based on parameters entered through said operator interaction means.

4. The method of claim 2, wherein said rendering step is controlled by said operator interaction means, and wherein said rendering can include translation, scaling or rotation of said data structures.

5. The method of claim 1 further comprising the steps of:

storing said value set in said storage means; and

repeating the transforming step through the storing said visual representation step wherever said operator interaction means indicate a change to said data transform.

6. A system for visualising numerical data wherein said data is continuously generated by a computer application, said system comprising:

storage means for periodically storing a set of said numerical data;

object generation means for transforming said set of data into graphical objects;

rendering means for rendering said graphical objects for display; and

display means for displaying said rendered graphical objects.

7. The system of claim 6, wherein said object generation means generates three dimensional translucent contour surfaces, and said rendering means renders said translucent contour surfaces allowing concurrent viewing of all such surfaces.

8. The system of claim 7 wherein said contour surfaces are generated as non-rational uniform b-spline functions of the data.

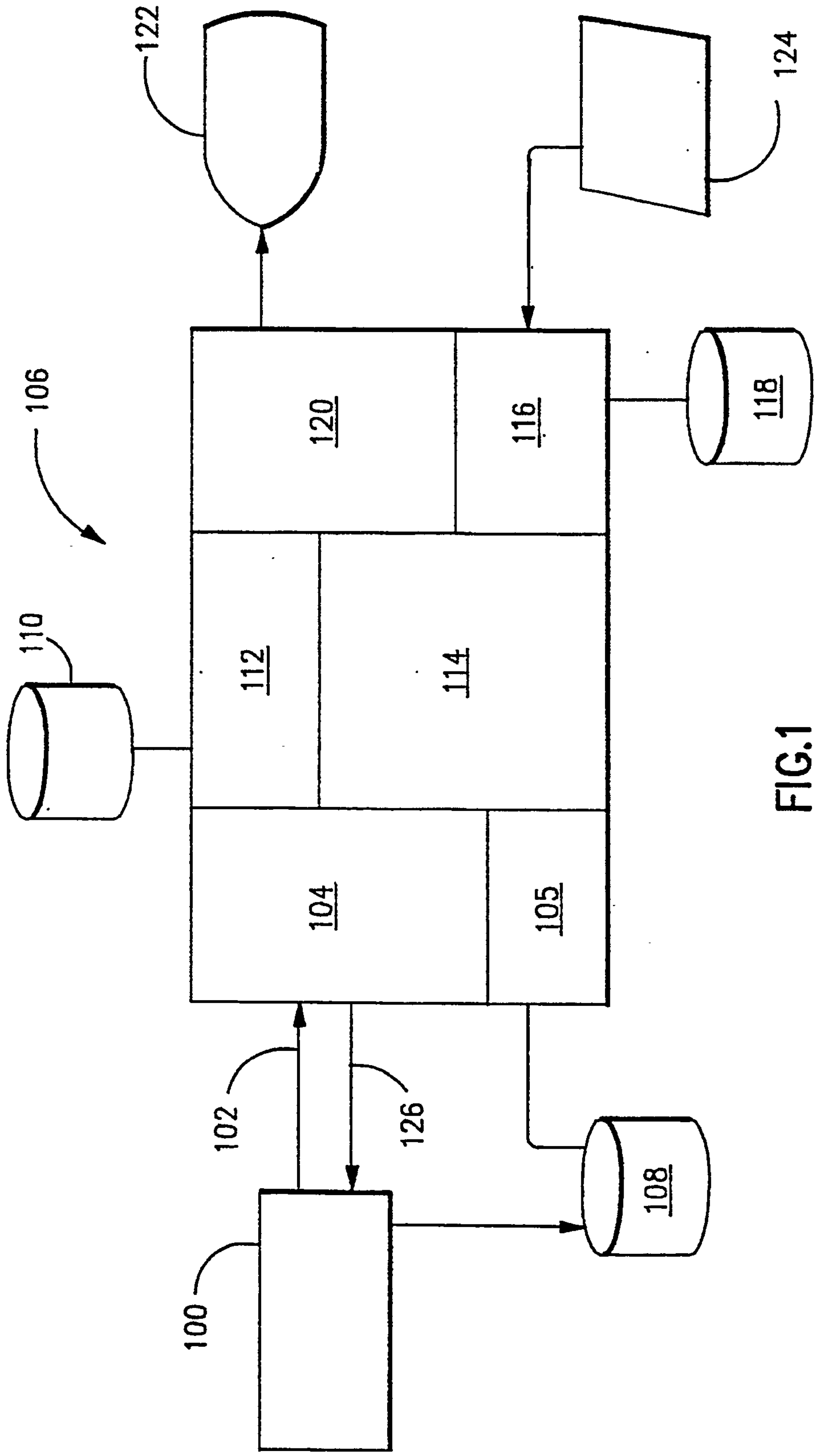


FIG.1

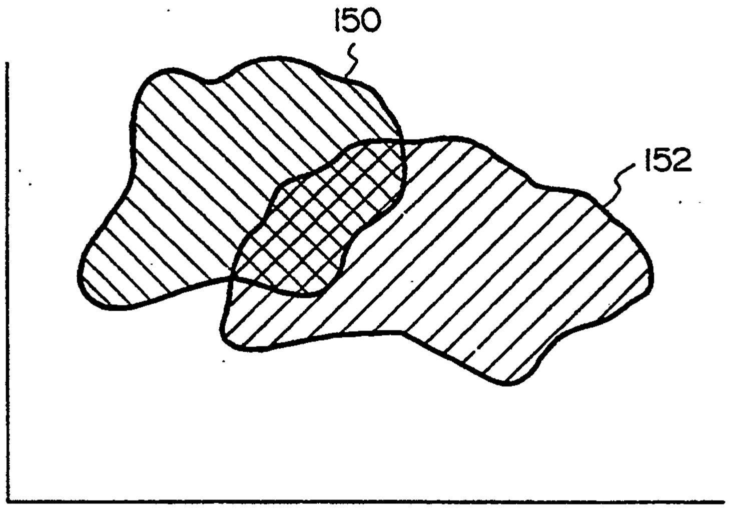
150
152

FIG.2

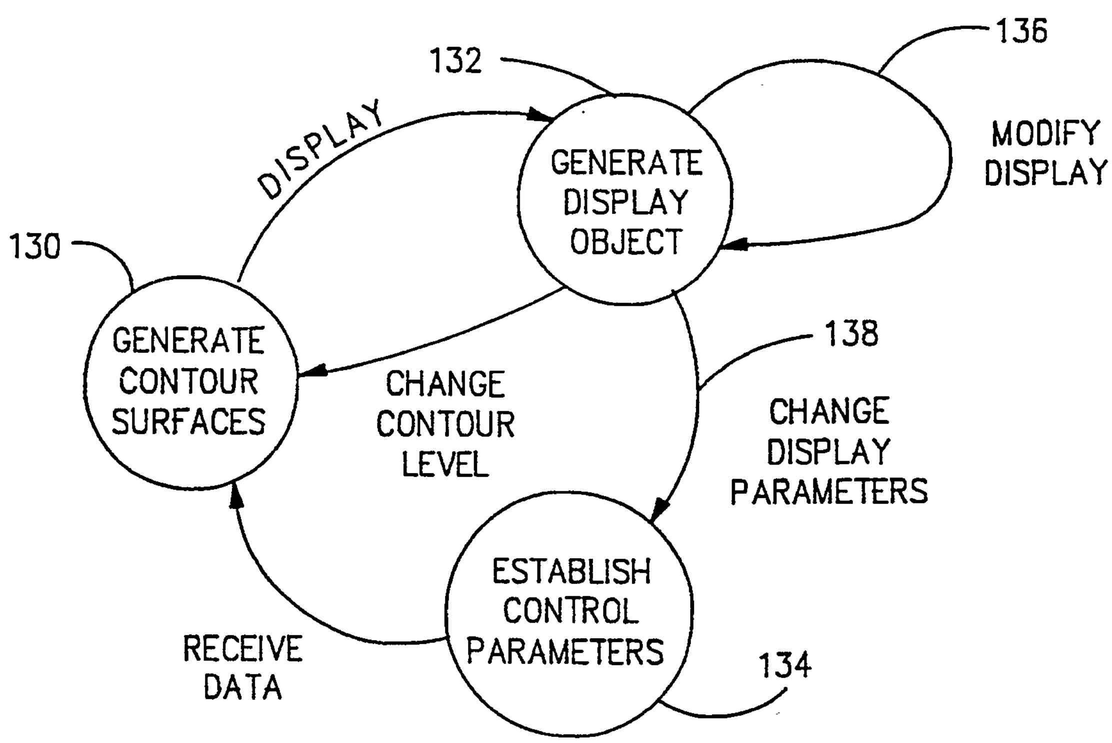
136
132
DISPLAY
GENERATE DISPLAY OBJECT
MODIFY DISPLAY
130
GENERATE CONTOUR SURFACES
138
CHANGE CONTOUR LEVEL
CHANGE DISPLAY PARAMETERS
ESTABLISH CONTROL PARAMETERS
RECEIVE DATA
134

FIG.3

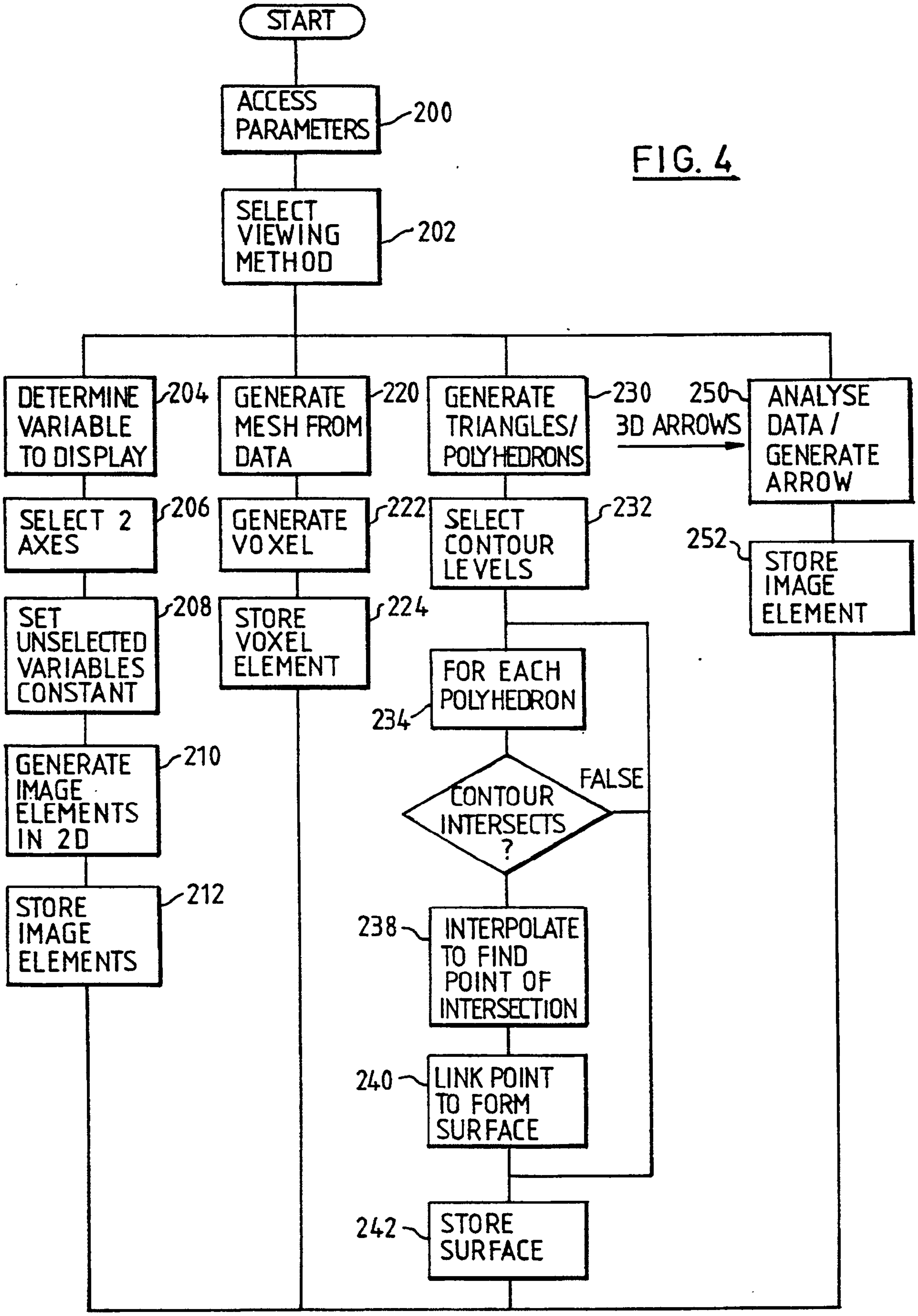

START
ACCESS PARAMETERS
200
SELECT VIEWING METHOD
202
DETERMINE VARIABLE TO DISPLAY
204
SELECT 2 AXES
206
SET UNSELECTED VARIABLES CONSTANT
208
GENERATE IMAGE ELEMENTS IN 2D
210
STORE IMAGE ELEMENTS
212
GENERATE MESH FROM DATA
220
GENERATE VOXEL
222
STORE VOXEL ELEMENT
224
GENERATE TRIANGLES/ POLYHEDRONS
230
SELECT CONTOUR LEVELS
232
FOR EACH POLYHEDRON
234
CONTOUR INTERSECTS ?
FALSE
238
INTERPOLATE TO FIND POINT OF INTERSECTION
240
LINK POINT TO FORM SURFACE
242
STORE SURFACE
250
3D ARROWS
ANALYSE DATA / GENERATE ARROW
252
STORE IMAGE ELEMENT


FIG. 4